# EUROPEAN PATENT SPECIFICATION

(11) **EP 3 923 637 B1**
(45) Date of publication and mention of the grant of the patent: **09.12.2026**
(21) Application number: 20778362.2
(22) Date of filing: 26.03.2020
(51) Int. Cl.: H04W 52/02, H04W 76/28, H04L 5/00

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 28.03.2019 CN 201910245772
(43) Date of publication of application: 15.12.2021
(73) Proprietor: Huawei Technologies Co., Ltd., Shenzhen, Guangdong 518129 (CN)
(72) Inventor: ZHENG, Lili, Shenzhen, Guangdong 518129 (CN); ZENG, Qinghai, Shenzhen, Guangdong 518129 (CN); ZHANG, Hongping, Shenzhen, Guangdong 518129 (CN)
(74) Representative: Gill Jennings & Every LLP
(86) International application number: PCT/CN2020/081456
(87) International publication number: WO 2020/192739

(56) References cited:
- EP-A1- 2 621 242
- EP-A1- 2 833 663
- WO-A1-2018/059564
- WO-A1-2019/033017
- CN-A- 102 932 882
- CN-A- 103 945 505
- CN-A- 104 219 738
- CN-A- 104 219 738
- CN-A- 108 307 547
- US-A1- 2013 294 307
- US-A1- 2018 338 332
- US-A1- 2020 015 312
- HUAWEI ET AL.: "On the Necessity of Introduction of DRX Based RRM Requirements for HST", 3GPP TSG-RAN WG4 MEETING # 76BIS R4-155791, 5 October 2015 (2015-10-05), XP051027449, DOI: 全文

## Description

### TECHNICAL FIELD

This application relates to the communication field, and more specifically, to a communication method and apparatus.

### BACKGROUND

A packet-based data stream is usually bursty. Data is transmitted in a period of time, but no data is transmitted in a next relatively long period of time. When no data is transmitted, power consumption may be reduced by stopping monitoring a physical downlink control channel (physical downlink control channel, PDCCH) (in this case, blind detection of the PDCCH is stopped), to prolong battery use time of a terminal device. This is an origin of a discontinuous reception (discontinuous reception, DRX) mechanism.

After a DRX cycle is configured for a terminal device, in each DRX cycle, the terminal device periodically wakes up for a period of time to monitor data. A period of time in which a terminal device periodically wakes up in a DRX cycle is referred to as on duration (On Duration). An on duration timer (On Duration Timer) is started at the beginning of each DRX cycle.

A DRX inactivity timer (DRX Inactivity Timer) is started (or restarted) when the terminal device successfully demodulates a PDCCH that is for initial data transmission and that is of the terminal device in the on duration. When the on duration timer expires, if the DRX inactivity timer is running, the terminal device does not enter a sleep state, and continues to remain in an active state. When the DRX inactivity timer expires, the terminal device enters the sleep state, and prepares to enter a next DRX cycle.

There are two types of DRX cycles: a DRX long cycle (DRX Long Cycle) and a DRX short cycle (DRX Short Cycle).

In a current technology, when the DRX inactivity timer expires, if a DRX short cycle is configured for the terminal device, the terminal device always enters a DRX short cycle. This causes power consumption to some extent.

US2018338332 relates to service specific short DRX cycles. WO2019033017 relates to enhanced connected mode DRX procedures for NR. EP2833663A1 relates to discontinuous reception dynamic configuration method, terminal and base station.

US 2013/294307 A1 discloses methods for UE enhancements for diverse data application. In one example, the UE applies a discontinuous reception (DRX) or discontinuous transmission (DTX) operation in a wireless network. The UE detects one or more predefined traffic conditions. Based on the detected traffic conditions, the UE either stays in the long DRX state longer or extends the short DRX cycle timer. In other examples, the UE configures an idle mode trigger condition. The UE detects one or more predefined traffic condition. Based on the detected traffic conditions, the UE may restart the inactivity timer. In other examples, the UE detects one or more predefined traffic conditions. The UE adaptively adjusts RLF triggering parameters based on the detected traffic conditions.

### SUMMARY

This application provides a communication method and apparatus. When a DRX inactivity timer expires, a terminal device can more flexibly determine a type of a next DRX cycle. Further, the determined next DRX cycle is not necessarily a DRX short cycle. This saves power of the terminal device to some extent.

The invention has been defined in the independent claims. Further specific technical features have been defined in the dependent claims.

According to a first aspect, a communication method according to appended claim 1 is provided. The method may be performed by a terminal device, or may be performed by a chip or a circuit disposed in the terminal device. The method includes: receiving data in an active time of a current DRX cycle; when a DRX inactivity timer of the current DRX cycle expires, determining a type of a next DRX cycle depending on whether at least some data received in the active time is associated with a DRX short cycle, where if the at least some data is not associated with a DRX short cycle, the next DRX cycle is a DRX long cycle, or the type of the next DRX cycle is the same as that of a DRX cycle previous to the current DRX cycle.

The active time is a time period between a start moment of an on duration (on duration) and a moment at which a DRX inactivity timer expires in one DRX cycle. In other words, the active time is a time period in which the terminal device is in a state of monitoring a PDCCH in one DRX cycle.

Receiving the data in the active time includes that the terminal device successfully demodulates a PDCCH that is for initial data transmission and that is of the terminal device in the active time. The DRX inactivity timer is started or restarted when the PDCCH that is for initial data transmission and that is of the terminal device is demodulated in the active time.

"Before a DRX inactivity timer expires" refers to before the last started or restarted DRX inactivity timer expires in the current DRX cycle.

The data that is not associated with a DRX short cycle includes data that is associated with a DRX long cycle, and/or data that is neither associated with a DRX short cycle nor associated with a DRX long cycle.

In the solutions provided in this application, if the at least some data received in the active time is not associated with a DRX short cycle, it is determined that the next DRX cycle is a DRX long cycle. For another example, if the at least some data received in the active time is not associated with a DRX short cycle, and the DRX cycle previous to the current DRX cycle is a DRX long cycle (or a DRX short cycle), it is determined that the next DRX cycle is a DRX long cycle (or a DRX short cycle).

In the solutions provided in this application, when the DRX inactivity timer expires, even if a DRX short cycle is configured for the terminal device, the next DRX cycle is not necessarily a DRX short cycle. When the at least some data received in the current DRX cycle is not associated with a DRX short cycle, it is determined that the next DRX cycle is a DRX long cycle, or the type of the next DRX cycle is determined based on a type of the previous DRX cycle. Therefore, compared with a current technology, in this application, the terminal device can more flexibly determine the type of the next DRX cycle.

In addition, the DRX cycle previous to the current DRX cycle is not necessarily a DRX short cycle. Therefore, in this application, when the DRX inactivity timer expires, the terminal device does not always enter a DRX short cycle. Compared with the current technology, this can effectively save power of the terminal device to some extent.

In the first aspect, if at least one piece of data in the at least some data is associated with a DRX short cycle, the next DRX cycle is a DRX short cycle.

In the solutions provided in this application, when the DRX inactivity timer expires, even if a DRX short cycle is configured for the terminal device, the next DRX cycle is not necessarily a DRX short cycle. When the data received in the current DRX cycle is associated with a DRX short cycle, the terminal device enters a DRX short cycle. Otherwise, the terminal device enters a DRX long cycle. Alternatively, the type of the next DRX cycle is determined based on the type of the previous DRX cycle. Compared with the current technology in which when the DRX inactivity timer expires, the terminal device always enters a DRX short cycle, the solution provided in this application can effectively save the power of the terminal device.

With reference to the first aspect, in a possible implementation of the first aspect, the at least some data received in the active time is data received in the following time period before the DRX inactivity timer expires in the current DRX cycle.

That is, the at least some data includes data received in the following time period:
T3: a time period between a moment at which the PDCCH that is for initial data transmission and that is of the terminal device is successfully demodulated for the last time in the active time and the moment at which the DRX inactivity timer expires.

In actual application, data received in T3 is selected according to a requirement to determine whether the data is associated with a DRX short cycle (or a DRX long cycle).

In the foregoing implementations, a plurality of manners may be used to determine whether the at least some data received in the active time is associated with a DRX short cycle or a DRX long cycle.

With reference to the first aspect, in a possible implementation of the first aspect, the terminal device determines, by determining whether a service corresponding to the at least some data is a delay-sensitive service, whether the at least some data is associated with a DRX short cycle or a DRX long cycle.

For example, the terminal device determines, by determining that the service corresponding to the at least some data is a delay-sensitive service, that the at least some data is associated with a DRX short cycle. The terminal device determines, by determining that the service corresponding to the at least some data is a delay-insensitive service, that the at least some data is not associated with a DRX short cycle.

In this implementation, the method further includes: sending, by the terminal device to a network device, indication information used to indicate that the at least some data is associated with or not associated with a DRX short cycle. For example, the indication information is carried by using radio resource control (radio resource control, RRC) signaling.

With reference to the first aspect, in a possible implementation of the first aspect, the terminal device determines, by determining whether a data bearing medium on which the at least some data is carried is associated with a DRX short cycle or a DRX long cycle, whether the at least some data is associated with a DRX short cycle or a DRX long cycle.

The data bearing medium is any one of the following: a logical channel (LCH), a logical channel group (LCG), a combination of the logical channel and the logical channel group, a data radio bearer (DRB), a quality of service flow (QoS Flow), and a protocol data unit session (PDU Session).

With reference to the first aspect, in a possible implementation of the first aspect, the method further includes: receiving configuration information of at least one data bearing medium from the network device, where the configuration information is used to indicate that the at least one data bearing medium is associated with a DRX short cycle or a DRX long cycle, and the at least some data includes data carried on the at least one data bearing medium.

With reference to the first aspect, in a possible implementation of the first aspect, when the configuration information includes first identification information, it indicates the at least one data bearing medium is associated with a DRX short cycle; or when the configuration information includes second identification information, it indicates the at least one data bearing medium is associated with a DRX long cycle.

With reference to the first aspect, in a possible implementation of the first aspect, when the configuration information includes third identification information, it indicates the at least one data bearing medium is associated with a DRX short cycle; and when the configuration information does not include the third identification information, it indicates the at least one data bearing medium is associated with a DRX long cycle; or when the configuration information includes fourth identification information, it indicates the at least one data bearing medium is associated with a DRX long cycle; and when the configuration information does not include the fourth identification information, it indicates the at least one data bearing medium is associated with a DRX short cycle.

In the technical solutions provided in this application, when the data bearing medium on which the received data is carried is not associated with a DRX short cycle, the terminal device determines that the next DRX cycle is a DRX long cycle, or the type of the next DRX cycle is the same as that of the DRX cycle previous to the current DRX cycle; when the data bearing medium on which the received data is carried is associated with a DRX short cycle, the terminal device determines that the next DRX cycle is a DRX short cycle. Therefore, in this application, when the DRX inactivity timer expires, the terminal device can more flexibly determine the type of the next DRX cycle. In addition, because the next DRX cycle is not always necessarily a DRX short cycle, the power can be saved.

Based on the foregoing descriptions, in the solutions provided in this application, when the DRX inactivity timer expires, even if a DRX short cycle is configured for the terminal device, the next DRX cycle is not necessarily a DRX short cycle. When the at least some data received in the current DRX cycle is not associated with a DRX short cycle, it is determined that the next DRX cycle is a DRX long cycle, or the type of the next DRX cycle is determined based on the type of the previous DRX cycle. Compared with the current technology in which when the DRX inactivity timer expires, the terminal device always enters a DRX short cycle, the solution provided in this application can effectively save the power of the terminal device.

According to a second aspect, a communication apparatus is provided. The communication apparatus is configured to implement the method according to the first aspect or any of the implementations of the first aspect.

Therefore, in the solutions provided in this application, when the DRX inactivity timer expires, even if a DRX short cycle is configured for the terminal device, the next DRX cycle is not necessarily a DRX short cycle. When the at least some data received in the current DRX cycle is not associated with a DRX short cycle, it is determined that the next DRX cycle is a DRX long cycle, or the type of the next DRX cycle is determined based on the type of the previous DRX cycle. Compared with the current technology, in this application, the terminal device can more flexibly determine the type of the next DRX cycle. In addition, the DRX cycle previous to the current DRX cycle is not necessarily a DRX short cycle. Therefore, in this application, when the DRX inactivity timer expires, the terminal device does not always enter a DRX short cycle. Compared with the current technology, this can effectively save the power of the terminal device to some extent.

### BRIEF DESCRIPTION OF DRAWINGS

FIG. 1 is a schematic diagram of a DRX cycle;
FIG. 2 is a schematic diagram of starting (or restarting) and expiration of a DRX inactivity timer (DRX inactivity timer) in a DRX mechanism;
FIG. 3 is a schematic diagram showing that a terminal device enters a DRX short cycle when a DRX inactivity timer expires in a current technology;
FIG. 4 is a schematic flowchart of a communication method according to an embodiment;
FIG. 5 is a schematic diagram of time periods in which at least some data is received in a current DRX cycle according to an embodiment;
FIG. 6 is a schematic flowchart of a communication method according to an example not forming part of the invention;
FIG. 7 is a schematic block diagram of a communication apparatus according to an embodiment;
FIG. 8 is a schematic diagram of a structure of a terminal device according to an embodiment; and
FIG. 9 is a schematic diagram of a structure of a network device according to an example not forming part of the invention.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

Unless otherwise defined, all technical and scientific terms used herein have the same meaning as commonly understood by a person skilled in the art to which this application pertains. The terms used in the specification of this application are merely for the purpose of describing specific implementations, and are not intended to limit this application.

To better understand the technical solutions provided in this application, the following first describes several concepts related to the implementations of this application.

### 1. Discontinuous reception (DRX) cycle, DRX long cycle (DRX Long Cycle), and DRX short cycle (DRX Short Cycle)

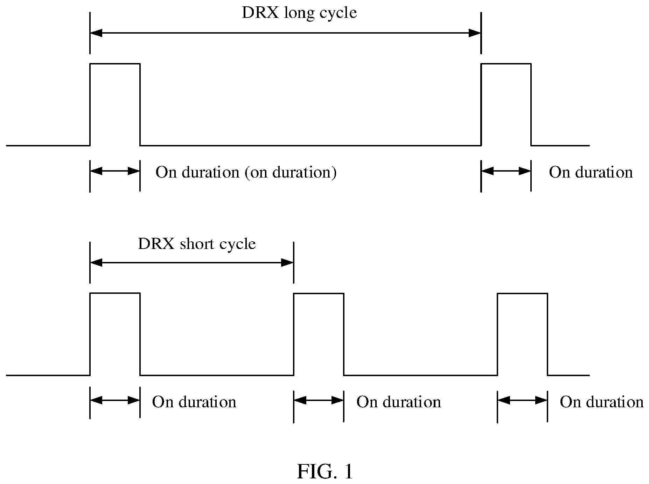

As shown in FIG. 1, each DRX cycle includes an on duration (on duration) and a sleep period. Duration of the on duration is determined by an on duration timer (on duration timer). At a start moment of each DRX cycle, the on duration timer is started, and a terminal device enters an active state and monitors data. When the on duration timer expires, and no DRX inactivity timer (DRX Inactivity Timer) (described below) is running currently, the terminal device enters a sleep state, and no longer monitors data. When a next DRX cycle arrives, the terminal device re-enters the active state.

There are two types of DRX cycles: a DRX long cycle (a DRX cycle shown in an upper part of FIG. 1) and a DRX short cycle (a DRX cycle shown in a lower part of FIG. 1). Generally, the DRX long cycle is applicable to a delay-insensitive service, and the DRX short cycle is applicable to a delay-sensitive service.

### 2. DRX Inactivity timer (DRX Inactivity Timer)

The DRX inactivity timer is an important concept in a DRX mechanism.

During a running period of the DRX inactivity timer, the terminal device monitors a PDCCH. The DRX inactivity timer is started or restarted when the terminal device successfully demodulates a PDCCH that is for initial data transmission and that is of the terminal device.

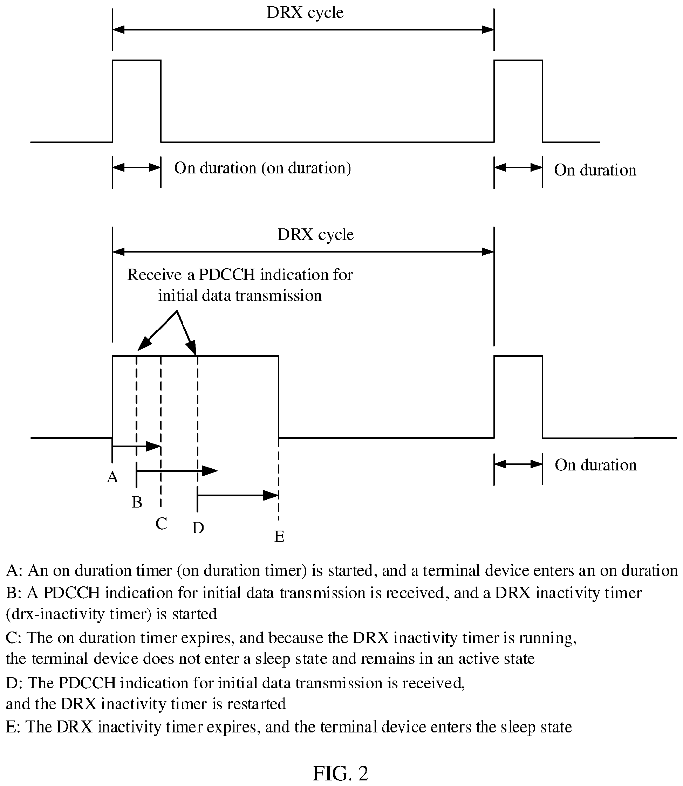

In a DRX cycle shown in an upper part of FIG. 2, if the terminal device does not receive data in an on duration, for example, does not demodulate the PDCCH that is for initial data transmission and that is of the terminal device, the terminal device enters a sleep period after the on duration ends (that is, an on duration timer expires).

In a DRX cycle shown in a lower part of FIG. 2, if the terminal device receives data in an on duration, the terminal device does not necessarily enter the sleep period after the on duration ends, but enters the sleep period after the DRX inactivity timer expires. Details are as follows:

A moment indicated by A indicates a start moment of a current DRX cycle. At this moment, the on duration timer is started. The terminal device keeps monitoring data (that is, remains in an active state) in a time period (that is, in the on duration) before the on duration timer expires.

A moment indicated by B indicates a moment at which the terminal device successfully demodulates the PDCCH of the terminal device for the first time, and may also be referred to as a moment at which a PDCCH indication for initial data transmission is received for the first time. At this moment, the DRX inactivity timer is started. Before the DRX inactivity timer expires, the terminal device remains in the active state and monitors data.

A moment indicated by C indicates a moment at which the on duration timer expires (that is, the on duration ends). At this moment, because the DRX inactivity timer is still running, the terminal device does not enter the sleep state, but continues to remain in the active state, and continues to monitor data.

A moment indicated by D indicates a moment at which the terminal device successfully demodulates the PDCCH of the terminal device again before the DRX inactivity timer started at the moment indicated by B expires, and may alternatively be described as a moment at which the PDCCH indication for initial data transmission is received again. At this moment, the DRX inactivity timer is restarted (it may be considered that the DRX inactivity timer started at the moment indicated by B is reset). Before the DRX inactivity timer expires, the terminal device remains in the active state and monitors data.

A moment indicated by E indicates a moment at which the DRX inactivity timer started at the moment indicated by D expires. At this moment, the terminal device enters the sleep state, and no longer monitors data.

A time period in which the terminal device is in a state of monitoring a PDCCH in one DRX cycle may be collectively referred to as an active time.

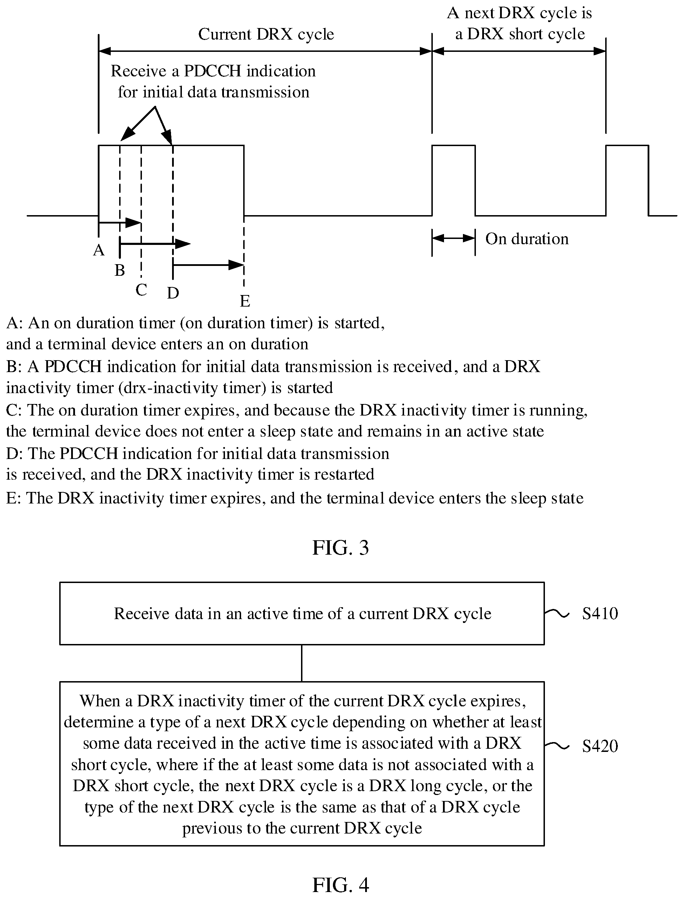

According to an existing DRX mechanism, after the DRX inactivity timer expires, if a DRX short cycle is configured for the terminal device, a next DRX cycle that the terminal device is to enter is a DRX short cycle. As shown in FIG. 3, at a moment indicated by E, the DRX inactivity timer expires, the terminal device enters the sleep state, and a next DRX cycle that the terminal device is to enter is a DRX short cycle.

In actual application, a delay-sensitive service and a delay-insensitive service both exist. The delay-sensitive service may be a service that has a relatively high delay requirement, for example, some emergency services. The delay-insensitive service may be a service that has a relatively low delay requirement, for example, some non-emergency services.

The delay-insensitive service has a relatively low requirement on a data transmission delay. For example, when the terminal device monitors data by using a DRX long cycle, a delay requirement of the delay-insensitive service may also be satisfied.

According to the existing DRX mechanism, after the DRX inactivity timer expires, if a DRX short cycle is configured for the terminal device, the terminal device always enters a DRX short cycle. This is unnecessary for the delay-insensitive service. In other words, this causes unnecessary power consumption.

To address the foregoing problem, this application proposes a solution for determining a DRX cycle. When the DRX inactivity timer expires, the terminal device can more flexibly determine a type of the next DRX cycle. Further, the determined next DRX cycle is not necessarily a DRX short cycle. This saves power of the terminal device to some extent.

It should be noted that FIG. 1 to FIG. 3 are merely examples rather than limitations. For example, in FIG. 2 and FIG. 3, before the DRX inactivity timer expires, a quantity of times that the terminal device receives the PDCCH indication is determined based on a specific situation, and is not limited. For another example, in the DRX mechanism, there are other concepts, for example, a HARQ round trip time timer (HARQ RTT Timer) and a DRX retransmission timer (DRX Retransmission Timer). These concepts also affect whether a terminal device is in an active state or in a sleep state. Because the implementations of this application are not directly related to these concepts, details are not described in this specification, and certainly there is no limitation.

The technical solutions in the implementations of this application may be applied to various communication systems, for example, a long term evolution (long term evolution, LTE) system, a fifth generation (the 5th Generation, 5G) mobile communication system, a new radio (new radio, NR) system, a machine-to-machine (machine-to-machine, M2M) communication system, another future evolved communication system, or the like.

The terminal device in the implementations of this application may be user equipment (user equipment, UE), an access terminal, a subscriber unit, a subscriber station, a mobile station, a remote station, a remote terminal, a mobile device, a user terminal, a terminal, a wireless communication device, a user agent, a user apparatus, or the like. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future evolved public land mobile network (public land mobile network, PLMN), or the like. This is not limited in the implementations of this application.

The network device in the implementations of this application may be a device configured to communicate with the terminal device, or may be any device with a wireless transceiver function, or a chip that may be disposed in the terminal device. The network device may be a base station. The base station may be configured to communicate with one or more terminal devices, or may be configured to communicate with one or more base stations having some functions of the terminal device (for example, communication between a macro base station and a micro base station). The network device may be a base station in an LTE system, a 5G system, an NR system, an M2M system, or another future evolved communication system. In addition, the network device may alternatively be an access point (access point, AP), a transmission node (transport point, TRP), a central unit (central unit, CU), or another network entity, and may include some or all of functions of the foregoing network entities. This is not limited in the implementations of this application.

FIG. 4 is a schematic flowchart of a communication method 400 according to an implementation of this application. The method 400 may be performed by a terminal device, or may be performed by a chip or a circuit disposed in the terminal device. The method 400 includes the following steps.

S410: Receive data in an active time of a current DRX cycle.

The active time is a time period between a start moment of an on duration (on duration) and a moment at which a DRX inactivity timer expires in one DRX cycle. In other words, the active time is a time period in which the terminal device is in a state of monitoring a PDCCH in one DRX cycle.

It should be understood that the terminal device monitors the PDCCH only in the active time, and may temporarily disable a receiver in a sleep period, to reduce power consumption.

Receiving the data in the active time includes that the terminal device successfully demodulates a PDCCH that is for initial data transmission and that is of the terminal device in the active time. The DRX inactivity timer is started or restarted when the PDCCH that is for initial data transmission and that is of the terminal device is demodulated in the active time.

S420: When the DRX inactivity timer of the current DRX cycle expires, determine a type of a next DRX cycle depending on whether at least some data received in the active time is associated with a DRX short cycle.

If the at least some data received in the active time is not associated with a DRX short cycle, the next DRX cycle is a DRX long cycle, or the type of the next DRX cycle is the same as that of a DRX cycle previous to the current DRX cycle.

For example, if the at least some data received in the active time is not associated with a DRX short cycle, it is determined that the next DRX cycle is a DRX long cycle. For another example, if the at least some data received in the active time is not associated with a DRX short cycle, and the DRX cycle previous to the current DRX cycle is a DRX long cycle (or a DRX short cycle), it is determined that the next DRX cycle is a DRX long cycle (or a DRX short cycle).

If at least one piece of data in the at least some data is associated with a DRX short cycle, the next DRX cycle is a DRX short cycle.

"Before a DRX inactivity timer expires" in this implementation of this application refers to before the last started DRX inactivity timer expires in the current DRX cycle. For example, in FIG. 3, "before a DRX inactivity timer expires" refers to before the moment indicated by E.

The data that is not associated with a DRX short cycle in this implementation of this application includes data that is associated with a DRX long cycle, and/or data that is neither associated with a DRX short cycle nor associated with a DRX long cycle.

Whether the data is associated with a DRX short cycle (or a DRX long cycle) may be determined based on a service attribute corresponding to the data, or whether the data is associated with a DRX short cycle (or a DRX long cycle) may be determined based on a data bearing medium on which the data is carried. This will be described below.

Therefore, in the solutions provided in this application, when the DRX inactivity timer expires, even if a DRX short cycle is configured for the terminal device, the next DRX cycle is not necessarily a DRX short cycle. When the at least some data received in the current DRX cycle is not associated with a DRX short cycle, it is determined that the next DRX cycle is a DRX long cycle, or the type of the next DRX cycle is determined based on the type of the previous DRX cycle. Compared with a current technology, the solutions in this application provide more flexible manners for determining the type of the next DRX cycle.

In addition, the DRX cycle previous to the current DRX cycle is not necessarily a DRX short cycle. Therefore, in this application, when the DRX inactivity timer expires, the terminal device does not always enter a DRX short cycle. Compared with the current technology, this can effectively save power of the terminal device to some extent.

In this implementation of this application, the at least some data received in the active time is be data received in time period T3 before the DRX inactivity timer expires in the current DRX cycle.

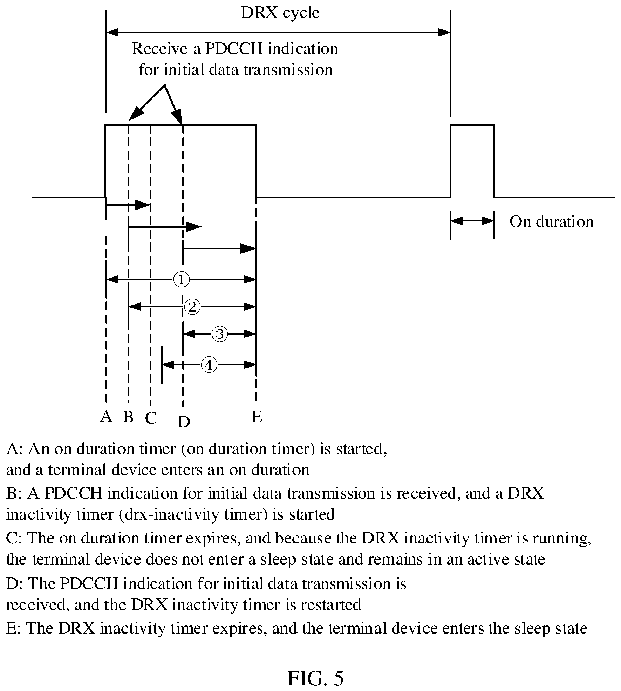

The at least some data includes data received in time period T3 from the following time periods:
T1: a time period between a start moment of an on duration (On duration) of the current DRX cycle and a moment at which the DRX inactivity timer expires, where T1 is a time period ① shown in FIG. 5;
T2: a time period between a moment at which a physical downlink control channel PDCCH that is for initial data transmission and that is of the terminal device is successfully demodulated for the first time in the active time and the moment at which the DRX inactivity timer expires, where T2 is a time period ② shown in FIG. 5, and
T2 may also be expressed as a time period between a time point at which the DRX inactivity timer is started for the first time and the moment at which the DRX inactivity timer expires in the current DRX cycle;
T3: a time period between a moment at which the PDCCH that is for initial data transmission and that is of the terminal device is successfully demodulated for the last time in the active time and the moment at which the DRX inactivity timer expires, where T3 is a time period ③ shown in FIG. 5; and
T4: a time period between the moment at which the DRX inactivity timer expires and a time point that is between the start moment of the on duration and the moment at which the DRX inactivity timer expires, where the time period between the time point and the moment at which the DRX inactivity timer expires is preset duration, and T4 is a time period ④ shown in FIG. 5. The preset duration may be set according to an actual requirement or specified in a protocol.

In actual application, data in T3 is selected according to a requirement to determine whether the data is associated with a DRX short cycle (or a DRX long cycle).

A plurality of manners may be used to determine whether the at least some data received in the active time is associated with a DRX short cycle or a DRX long cycle.

Optionally, in an implementation, the terminal device determines, by determining whether a service corresponding to the at least some data is a delay-sensitive service, whether the at least some data is associated with a DRX short cycle or a DRX long cycle.

For example, the terminal device determines, by determining that a service corresponding to the at least some data is a delay-sensitive service, that the at least some data is associated with a DRX short cycle. The terminal device determines, by determining that a service corresponding to the at least some data is a delay-insensitive service, that the at least some data is not associated with a DRX short cycle.

In this implementation, the method 400 further includes: The terminal device sends, to a network device, indication information used to indicate that the at least some data is associated with or not associated with a DRX short cycle. For example, the indication information is carried by using radio resource control (radio resource control, RRC) signaling.

In this implementation of this application, the delay-sensitive service indicates a service that has a relatively high delay requirement, and the delay-insensitive service indicates a service that has a low delay requirement.

Optionally, in another implementation, whether the at least some data is associated with a DRX short cycle or a DRX long cycle is determined by determining whether a data bearing medium on which the at least some data is carried is associated with a DRX short cycle or a DRX long cycle.

If the data bearing medium on which the at least some data is carried is associated with a DRX long cycle, or is neither associated with a DRX long cycle nor associated with a DRX short cycle, it is determined that the at least some data is not associated with a DRX short cycle.

If the data bearing medium on which the at least some data is carried is associated with a DRX short cycle, it is determined that the at least some data is associated with a DRX short cycle.

Optionally, in some implementations, if the data bearing medium on which at least one piece of data in the at least some data is carried is associated with a DRX short cycle, it is determined that the next DRX cycle is a DRX short cycle.

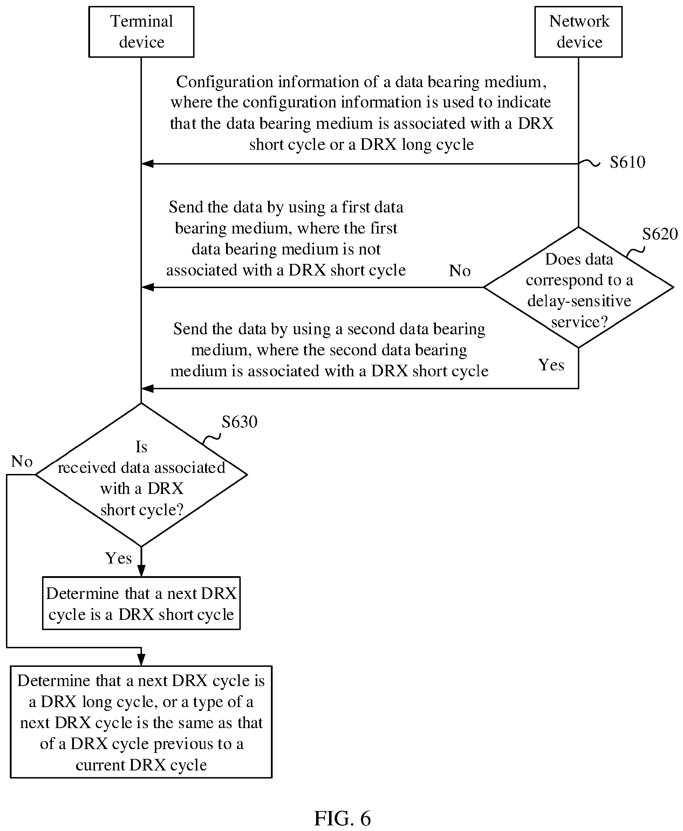

FIG. 6 is a schematic interaction flowchart of a communication method 600 according to an example not forming part of the invention. The method 600 includes the following steps.

S610: A network device determines configuration information of a data bearing medium, and sends the configuration information to a terminal device, where the configuration information is used to indicate that the data bearing medium is associated with a DRX short cycle or a DRX long cycle.

There may be a plurality of data bearing mediums between the network device and the terminal device.

Optionally, in some implementations, the network device configures all data bearing mediums between the network device and the terminal device, configures some of the data bearing mediums to be associated with a DRX long cycle, and configures the remaining part of the data bearing mediums to be associated with a DRX short cycle.

Optionally, in some implementations, the network device configures some data bearing mediums between the network device and the terminal device.

The network device configures all of the some data bearing mediums to be associated with a DRX short cycle;
the network device configures all of the some data bearing mediums to be associated with a DRX long cycle; or
the network device configures a part of the some data bearing mediums to be associated with a DRX short cycle, and configures the remaining part of the some data bearing mediums to be associated with a DRX long cycle.

For example, the network device configures only some data bearing mediums that need to carry a delay-sensitive service to be associated with a DRX short cycle, and does not configure the other data bearing mediums, that is, does not configure the other data bearing mediums to be associated with a DRX short cycle (or a DRX long cycle).

Optionally, when the configuration information includes first identification information, it indicates at least one data bearing medium is associated with a DRX short cycle; or when the configuration information includes second identification information, it indicates at least one data bearing medium is associated with a DRX long cycle.

One data bearing medium is used as an example. A field is set in configuration information of the data bearing medium. The field may have two values. One value indicates that the data bearing medium is associated with a DRX short cycle, and the other value indicates that the data bearing medium is associated with a DRX long cycle.

When the configuration information includes third identification information, it indicates the at least one data bearing medium is associated with a DRX short cycle; when the configuration information does not include the third identification information, it indicates the at least one data bearing medium is associated with a DRX long cycle; or when the configuration information includes fourth identification information, it indicates the at least one data bearing medium is associated with a DRX long cycle; when the configuration information does not include the fourth identification information, it indicates the at least one data bearing medium is associated with a DRX short cycle.

One data bearing medium is still used as an example. A field is set in configuration information of the data bearing medium. The field is optional (optional). If the field exists, it indicates the data bearing medium is associated with a DRX short cycle (or a DRX long cycle). If the field does not exist, it indicates the data bearing medium is associated with a DRX long cycle (or a DRX short cycle).

For example, the network device may send the configuration information of the data bearing medium to the terminal device by using radio resource control (radio resource control, RRC) signaling.

In other words, the network device may configure an association relationship between the data bearing medium and a DRX short cycle or a DRX long cycle by using the RRC signaling.

S620: The network device determines whether data to be sent to the terminal device corresponds to a delay-sensitive service. If the data to be sent to the terminal device does not correspond to the delay-sensitive service, the data is sent to the terminal device by using a first data bearing medium. If the data to be sent to the terminal device corresponds to the delay-sensitive service, the data is sent to the terminal device by using a second data bearing medium.

The first data bearing medium is not associated with a DRX short cycle. For example, the first data bearing medium is configured to be associated with a DRX long cycle; or the first data bearing medium is neither configured to be associated with a DRX long cycle, nor configured to be associated with a DRX short cycle.

The second data bearing medium is configured to be associated with a DRX short cycle.

S630: The terminal device determines whether at least some data received in an active time of a current DRX cycle is associated with a DRX short cycle. If the at least some data received in the active time of the current DRX cycle is associated with a DRX short cycle, it is determined that a next DRX cycle is a DRX short cycle. If the at least some data received in the active time of the current DRX cycle is not associated with a DRX short cycle, it is determined that the next DRX cycle is a DRX long cycle; or when a DRX cycle previous to the current DRX cycle is a DRX long cycle (or a DRX short cycle), it is determined that the next DRX cycle is a DRX long cycle (or a DRX short cycle).

If all data bearing mediums on which the at least some data is carried are not associated with a DRX short cycle, for example, are associated with a DRX long cycle, or are neither associated with a DRX long cycle nor associated with a DRX short cycle, the terminal device determines that the at least some data is not associated with a DRX short cycle.

If the data bearing medium on which the at least some data is carried is associated with a DRX short cycle, the terminal device determines that the at least some data is associated with a DRX short cycle.

Optionally, in this implementation, step S610 may not be performed.

For example, after configuring the data bearing medium once, the network device uses the configuration in a plurality of subsequent data transmission processes, and does not need to configure the data bearing medium during each data transmission.

In this implementation, the network device sends the data corresponding to the delay-sensitive service to the terminal device by using a data bearing medium associated with a DRX short cycle, and sends the data corresponding to the delay-insensitive service to the terminal device by using a data bearing medium not associated with a DRX short cycle. When the data bearing medium on which the received data is carried is not associated with a DRX short cycle, the terminal device determines that the next DRX cycle is a DRX long cycle, or a type of the next DRX cycle is the same as that of the DRX cycle previous to the current DRX cycle. When the data bearing medium on which the received data is carried is associated with a DRX short cycle, the terminal device determines that the next DRX cycle is a DRX short cycle. Therefore, in this implementation of this application, when a DRX inactivity timer expires, the terminal device does not always enter a DRX short cycle. In this way, power can be saved. In addition, for the delay-sensitive service, when the DRX inactivity timer expires, the terminal device enters a DRX short cycle. In this way, a delay requirement of the delay-sensitive service can be satisfied. Therefore, in this implementation of this application, both a power saving requirement and the delay requirement of the delay-sensitive service can be better satisfied.

The data bearing medium in the implementations of this application may be any one of the following: a logical channel (logical channel, LCH), a logical channel group (logical channel group, LCG), a combination of the logical channel and the logical channel group, a data radio bearer (data radio bearer, DRB), a quality of service flow (QoS Flow), and a protocol data unit session (PDU Session).

The logical channel may be classified into a logical control channel and a logical data channel. The logical control channel is used to transmit control and configuration information, and the logical data channel is used to transmit user data.

For example, a logical channel in an NR system includes any one or more of the following: a broadcast control channel (broadcast control channel, BCCH), a paging control channel (paging control channel, PCCH), a common control channel (common control channel, CCCH), a dedicated control channel (dedicated control channel, DCCH) and a dedicated traffic channel (dedicated traffic channel, DTCH).

A media access control (media access control, MAC) layer may provide a service to a radio link control (radio link control structure, RLC) layer through the logical channel. From a perspective of a physical layer, the MAC layer uses the service in a form of a transport channel. The transport channel defines how information is transmitted over an air interface. Data on the transport channel is organized in a form of a transport block (transport block).

A transport format (Transport Format, TF) related to the transport block defines how a transport block is transmitted over an air interface. The TF may include the following related information: a transport block size, a modulation and coding scheme, and antenna mapping. Based on different TFs, the MAC layer can implement different data rates (data rates). This process is referred to as transport format selection (transport format selection).

The transport channel in the NR system may include any one or more of the following: a broadcast channel (broadcast channel, BCH), a paging channel (paging channel, PCH), a downlink shared channel (downlink shared channel, DL-SCH), an uplink shared channel (uplink shared channel, UL-SCH), and a random access channel (random access channel, RACH).

One of functions of the MAC layer is to multiplex and map different logical channels onto an appropriate transport channel. To support priority processing, a plurality of logical channels (each of which has its own RLC entity) may be multiplexed onto one transport channel by the MAC layer. At a receive end, the MAC layer performs demultiplexing (demultiplexing) and forwards an RLC protocol data unit (Protocol Data Unit, PDU) to a corresponding RLC entity. To support demultiplexing at the receive end, a MAC header (MAC header) needs to be used. In the NR system, a subheader (subheader) corresponding to each MAC service data unit (service data unit, SDU) is placed in front of the SDU. The RLC PDU is actually the MAC SDU. The subheader contains a logical channel ID (LCID) and a length of the PDU (The subheader contains the identity of the logical channel (LCID) from which the RLC PDU originated and the length of the PDU in bytes). A flag is further included to indicate a length of a length indicator, and there is further a reserved bit for future use.

In addition to multiplexing different logical channels, the MAC layer may further add a MAC control element (MAC control element, MAC CE) to the transport block sent on the logical channel. The MAC CE is used for control signaling.

For example, there may be the following plurality of types of MAC CEs with respective different purposes.
(1) a scheduling-related MAC CE, such as a buffer status report and a power headroom report used to assist uplink scheduling, and a configured grant confirmation MAC CE used when semi-persistent scheduling is configured;
(2) a random access-related MAC CE, such as a C-RNTI and a contention-resolution MAC CE;
(3) a timing advance MAC CE;
(4) activation/deactivation of a carrier;
(5) a DRX-related MAC CE;
(6) a MAC CE related to PDCP duplicate detection; and
(7) activation/deactivation of CSI reporting and SRS transmission.

The logical channel group (LCG) includes a plurality of logical channels, and a purpose is to send buffer status reports (buffer status report, BSR) of the plurality of logical channels together. In this way, signaling overheads are reduced. Otherwise, sending one BSR on each logical channel causes a large waste.

It should be understood that the LCID is different from an LCG ID. The LCID is used to uniquely specify a MAC SDU, a MAC control element, or a padding in a MAC PDU. The LCG ID is used to specify an ID of a logical channel group to which a logical channel belongs and is used only for BSR reporting.

Based on the foregoing descriptions, according to the technical solution provided in this application, when there is no delay-sensitive service, the terminal device can enter a DRX long cycle after the DRX inactivity timer expires, thereby saving power.

Optionally, in some of the foregoing implementations, when the terminal device has a power saving requirement, the following manner is used to determine whether the next DRX cycle is a DRX short cycle or a DRX long cycle.

If the at least some data received in the active time is not associated with a DRX short cycle, it is determined that the next DRX cycle is a DRX long cycle, or it is determined that the type of the next DRX cycle is the same as that of the DRX cycle previous to the current DRX cycle.

If at least one piece of data in the at least some data is associated with a DRX short cycle, it is determined that the next DRX cycle is a DRX short cycle.

A scenario in which the terminal device has a power saving requirement is, for example, that the terminal device has a power saving tendency, or the terminal device works in a power saving mode.

The terminal device may indicate, by sending an indication to the network device, that the terminal device has a power saving tendency. For example, the indication is sent by using an RRC message.

The power saving mode of the terminal device may be specified in a protocol, or triggered by the terminal device indicating the network device, or triggered by the network device indicating the terminal device.

Optionally, in the implementation shown in FIG. 6, the network device performs step S610 and step S620 when the terminal device has a power saving requirement.

For example, the network device learns that the terminal device has a power saving requirement, and performs step S610 and step S620. If the terminal device has no power saving requirement, the network device may not perform step S610 and step S620.

The implementations described in this specification may be independent solutions, or may be combined based on internal logic. These solutions all fall within the protection scope of this application.

It may be understood that in the foregoing method implementations, the methods and operations that are implemented by the terminal device may alternatively be implemented by a component (for example, a chip or a circuit) that may be used in the terminal device, and the methods and the operations that are implemented by the network device may alternatively be implemented by a component (for example, a chip or a circuit) that may be used in the network device.

The foregoing describes the method implementations provided in the implementations of this application, and the following describes apparatus implementations provided in the implementations of this application. It should be understood that descriptions of the apparatus implementations mutually correspond to the descriptions of the method implementations. Therefore, for content that is not described in detail, refer to the foregoing method implementations. For brevity, details are not described herein again.

The foregoing mainly describes the solutions provided in the implementations of this application from a perspective of interaction between network elements. It may be understood that, to implement the foregoing functions, each network element, such as a transmit end device or a receive end device, includes a corresponding hardware structure and/or software module for performing each function. A person skilled in the art may be aware that units and algorithm steps in the examples described with reference to the implementations disclosed in this specification may be implemented by hardware or a combination of computer software and hardware in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In the implementations of this application, a transmit end device or a receive end device may be divided into function modules based on the foregoing method examples. For example, each function module may be obtained through division based on a corresponding function, or two or more functions may be integrated into one processing module. The foregoing integrated module may be implemented in a form of hardware, or may be implemented in a form of a software function module. It should be noted that, in the implementations of this application, division into the modules is an example, and is merely logical function division. In an actual implementation, another division manner may be used. An example in which function modules are obtained through division based on functions is used below for description.

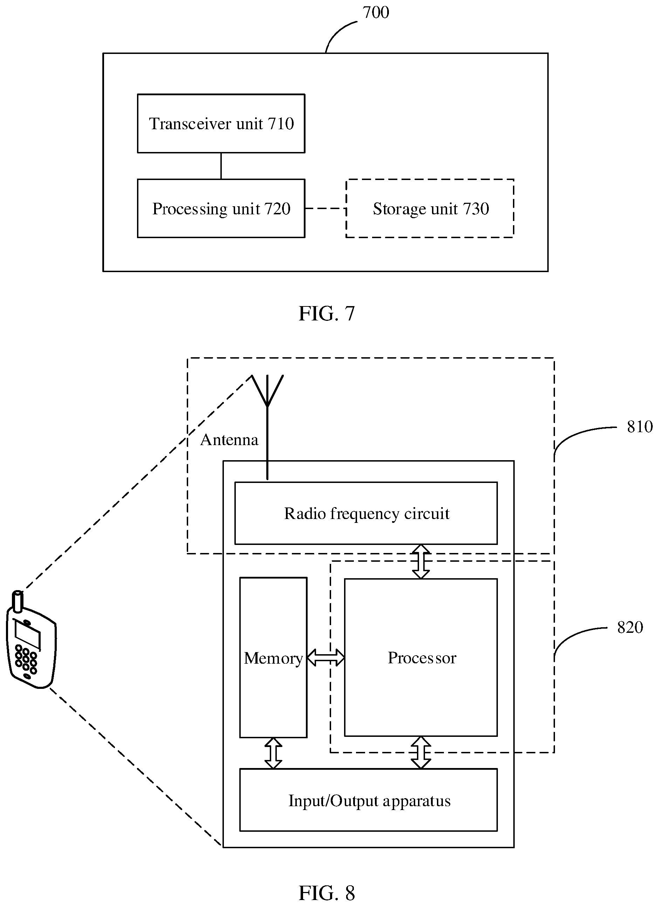

FIG. 7 is a schematic block diagram of a communication apparatus 700 according to an implementation of this application. The communication apparatus 700 includes a transceiver unit 710 and a processing unit 720. The transceiver unit 710 may communicate with the outside, and the processing unit 720 is configured to process data. The transceiver unit 710 may also be referred to as a communication interface or a communication unit.

The communication apparatus 700 is configured to perform an action performed by the terminal device in the foregoing method embodiments.

The communication apparatus 700 is configured to perform an action performed by the terminal device in the foregoing method embodiments. In this case, the communication apparatus 700 may be the terminal device, or may be a component used in the terminal device. The transceiver unit 710 is configured to perform a sending/receiving-related operation on a terminal device side in the foregoing method implementations, and the processing unit 720 is configured to perform a processing-related operation of the terminal device in the foregoing method implementations.

The transceiver unit 710 is configured to receive data in an active time of a current DRX cycle. The processing unit 720 is configured to: when a DRX inactivity timer of the current DRX cycle expires, determine that the terminal device enters a next DRX cycle, where if at least some data received in the active time is not associated with a DRX short cycle, the next DRX cycle is a DRX long cycle, or a type of the next DRX cycle is the same as that of a DRX cycle previous to the current DRX cycle. If at least one piece of data in the at least some data is associated with a DRX short cycle, the next DRX cycle is a DRX short cycle.

Optionally, the data that is not associated with a DRX short cycle includes any one or more of the following: data that is associated with a DRX long cycle, and data that is neither associated with a DRX long cycle nor associated with a DRX short cycle.

The at least some data is data received in the time period T3 shown in FIG. 5. For details, refer to the foregoing descriptions. Details are not described herein again.

Optionally, the transceiver unit 710 is further configured to receive configuration information of at least one data bearing medium from a network device, where the configuration information is used to indicate that the at least one data bearing medium is associated with a DRX short cycle or a DRX long cycle, and the at least some data includes data carried on the at least one data bearing medium.

Optionally, when the configuration information includes first identification information, it indicates the at least one data bearing medium is associated with a DRX short cycle; or when the configuration information includes second identification information, it indicates the at least one data bearing medium is associated with a DRX long cycle.

Optionally, when the configuration information includes third identification information, it indicates the at least one data bearing medium is associated with a DRX short cycle; when the configuration information does not include the third identification information, it indicates the at least one data bearing medium is associated with a DRX long cycle; or when the configuration information includes fourth identification information, it indicates the at least one data bearing medium is associated with a DRX long cycle; when the configuration information does not include the fourth identification information, it indicates the at least one data bearing medium is associated with a DRX short cycle.

Optionally, the at least one data bearing medium is any one of the following: a logical channel (LCH), a logical channel group (LCG), a data radio bearer (DRB), a quality of service flow (QoS Flow), and a protocol data unit session (PDU Session).

In an example not forming part of the invention, the communication apparatus 700 may be configured to perform an action performed by the network device in the foregoing method implementations. In this case, the communication apparatus 700 may be the network device, or may be a component used in the network device. The transceiver unit 710 is configured to perform a sending/receiving-related operation on a network device side in the foregoing method implementations, and the processing unit 720 is configured to perform a processing-related operation of the network device in the foregoing method implementations.

In an implementation of this design, the processing unit 720 is configured to determine configuration information of a data bearing medium, where the configuration information is used to indicate the data bearing medium is associated with a DRX short cycle or a DRX long cycle. The transceiver unit 710 is configured to send the configuration information to a terminal device.

Optionally, when the configuration information includes first identification information, it indicates the data bearing medium is associated with a DRX short cycle; or when the configuration information includes second identification information, it indicates the data bearing medium is associated with a DRX long cycle.

Optionally, when the configuration information includes third identification information, it indicates the data bearing medium is associated with a DRX short cycle; when the configuration information does not include the third identification information, it indicates the data bearing medium is associated with a DRX long cycle; or when the configuration information includes fourth identification information, it indicates the data bearing medium is associated with a DRX long cycle; when the configuration information does not include the fourth identification information, it indicates the data bearing medium is associated with a DRX short cycle.

Optionally, the transceiver unit 710 is further configured to: when data to be sent to the terminal device corresponds to a delay-insensitive service, send the data to the terminal device by using a first data bearing medium, where the first data bearing medium is not associated with a DRX short cycle.

Optionally, the first data bearing medium is associated with a DRX long cycle. Alternatively, the first data bearing medium is neither associated with a DRX long cycle nor associated with a DRX short cycle.

Optionally, the transceiver unit 710 is further configured to: when the data to be sent to the terminal device corresponds to a delay-sensitive service, send the data to the terminal device by using a second data bearing medium, where the second data bearing medium is associated with a DRX short cycle.

Optionally, at least one data bearing medium is any one of the following: a logical channel (LCH), a logical channel group (LCG), a data radio bearer (DRB), a quality of service flow (QoS Flow), and a protocol data unit session (PDU Session).

It should be understood that the processing unit 720 in the foregoing implementation may be implemented by a processor or a processor-related circuit, and the transceiver unit 710 may be implemented by a transceiver or an interface circuit-related circuit.

As shown in FIG. 7, optionally, the communication apparatus 700 may further include a storage unit 730, configured to store a computer program, and the processing unit 720 is configured to invoke the computer program from the storage unit 730 and run the computer program, so that the communication apparatus 700 performs the method on the terminal device side in the foregoing method implementations, or performs the method on the network device side in the foregoing method implementations.

Alternatively, optionally, the storage unit 730 may be configured to store data or other information.

The processing unit 720 and the storage unit 730 may be separated or integrated.

The storage unit 730 may be implemented by a memory or a memory-related circuit.

It should be understood that the processor mentioned in this implementation of this application may be a central processing unit (Central Processing Unit, CPU), another general-purpose processor, a digital signal processor (Digital Signal Processor, DSP), an application-specific integrated circuit (application-specific Integrated Circuit, ASIC), a field programmable gate array (Field Programmable Gate Array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in this implementation of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

An implementation of this application further provides a communication apparatus 800. The communication apparatus 800 may be a terminal device or a chip. The communication apparatus 800 is configured to perform an action performed by the terminal device in the foregoing method implementations.

The communication apparatus 800 is a terminal device. FIG. 8 is a simplified schematic diagram of a structure of the terminal device. For ease of understanding and convenience of figure illustration, an example in which the terminal device is a mobile phone is used in FIG. 8. As shown in FIG. 8, the terminal device includes a processor, a memory, a radio frequency circuit, an antenna, and an input/output apparatus. The processor is mainly configured to: process a communication protocol and communication data, control the terminal device, execute a software program, process data of the software program, and so on. The memory is mainly configured to store the software program and data. The radio frequency circuit is mainly configured to: perform conversion between a baseband signal and a radio frequency signal, and process the radio frequency signal. The antenna is mainly configured to send and receive a radio frequency signal in an electromagnetic wave form. The input/output apparatus, such as a touchscreen, a display screen, or a keyboard, is mainly configured to: receive data entered by a user, and output data to the user. It should be noted that some types of terminal devices may have no input/output apparatus.

When data needs to be sent, after performing baseband processing on the to-be-sent data, the processor outputs a baseband signal to the radio frequency circuit. After performing radio frequency processing on the baseband signal, the radio frequency circuit sends a radio frequency signal to the outside in an electromagnetic wave form through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 8 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in the implementations of this application.

In the implementations of this application, the antenna and the radio frequency circuit that have sending and receiving functions may be considered as a transceiver unit of the terminal device, and the processor that has a processing function may be considered as a processing unit of the terminal device.

As shown in FIG. 8, the terminal device includes a transceiver unit 810 and a processing unit 820. The transceiver unit 810 may also be referred to as a transceiver, a transceiver machine, a transceiver apparatus, or the like. The processing unit 820 may also be referred to as a processor, a processing board, a processing module, a processing apparatus, or the like. Optionally, a component that is in the transceiver unit 810 and that is configured to implement a receiving function may be considered as a receiving unit, and a component that is in the transceiver unit 810 and that is configured to implement a sending function may be considered as a sending unit. In other words, the transceiver unit 810 includes the receiving unit and the sending unit. The transceiver unit may also be sometimes referred to as a transceiver machine, a transceiver, a transceiver circuit, or the like. The receiving unit may also be sometimes referred to as a receiver machine, a receiver, a receiver circuit, or the like. The sending unit may also be sometimes referred to as a transmitter machine, a transmitter, a transmitter circuit, or the like.

For example, in an implementation, the processing unit 820 is configured to perform S420 in FIG. 4, and/or the processing unit 820 is further configured to perform other processing steps on a terminal device side in the implementations of this application. The transceiver unit 810 is further configured to perform step S410 shown in FIG. 4, and/or the transceiver unit 810 is further configured to perform other sending and receiving steps on the terminal device side.

In an example not forming part of the invention, the processing unit 820 is configured to perform the processing operation in step S630 in FIG. 6, and/or the processing unit 820 is further configured to perform other processing steps on the terminal device side in the implementations of this application. The transceiver unit 810 is further configured to perform the receiving operations on the terminal device side in steps S610 and S620 shown in FIG. 6, and/or the transceiver unit 810 is further configured to perform other sending and receiving steps on the terminal device side.

It should be understood that FIG. 8 is merely an example instead of a limitation. The terminal device including the transceiver unit and the processing unit may not depend on the structure shown in FIG. 8.

When the communication apparatus 800 is a chip, the chip includes a transceiver unit and a processing unit. The transceiver unit may be an input/output circuit or a communication interface. The processing unit may be a processor, a microprocessor, or an integrated circuit integrated on the chip.

An example not forming part of the invention further provides a communication apparatus 900. The communication apparatus 900 may be a network device or a chip. The communication apparatus 900 may be configured to perform an action performed by the network device in the foregoing method implementations.

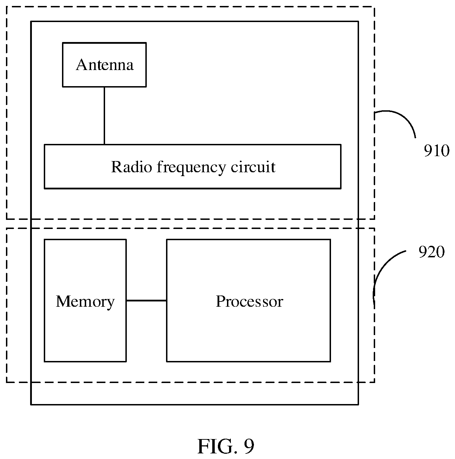

When the communication apparatus 900 is a network device, for example, a base station, FIG. 9 is a simplified schematic diagram of a structure of the base station. The base station includes a part 910 and a part 920. The part 910 is mainly configured to: send and receive a radio frequency signal, and perform conversion between the radio frequency signal and a baseband signal. The part 920 is mainly configured to: perform baseband processing, control the base station, and the like. The part 910 may be usually referred to as a transceiver unit, a transceiver machine, a transceiver circuit, a transceiver, or the like. The part 920 is usually a control center of the base station, may usually be referred to as a processing unit, and is configured to control the base station to perform a processing operation on a network device side in the foregoing method implementations.

The transceiver unit of the part 910 may also be referred to as a transceiver machine, a transceiver, or the like, and includes an antenna and a radio frequency unit. The radio frequency unit is mainly configured to perform radio frequency processing. Optionally, a component that is of the part 910 and that is configured to implement a receiving function may be considered as a receiving unit, and a component that is configured to implement a sending function may be considered as a sending unit. In other words, the part 910 includes the receiving unit and the sending unit. The receiving unit may also be referred to as a receiver machine, a receiver, a receiver circuit, or the like. The sending unit may be referred to as a transmitter machine, a transmitter, a transmitter circuit, or the like.

The part 920 may include one or more boards, and each board may include one or more processors and one or more memories. The processor is configured to read and execute a program in the memory to implement a baseband processing function and control the base station. If there are a plurality of boards, the boards may be interconnected to enhance a processing capability. In an optional implementation, alternatively, the plurality of boards may share one or more processors, or the plurality of boards share one or more memories, or the plurality of boards simultaneously share one or more processors.

For example, in an implementation, the transceiver unit in the part 910 is configured to perform the sending operations on the network device side in steps S610 and S620 in FIG. 6, and/or the transceiver unit in the part 910 is further configured to perform other sending and receiving steps on the network device side in the implementations of this application. The processing unit in the part 920 is configured to perform the processing operation in step S620 in FIG. 6.

It should be understood that FIG. 9 is merely an example instead of a limitation. The network device including the transceiver unit and the processing unit may not depend on the structure shown in FIG. 9.

When the communication apparatus 900 is a chip, the chip includes a transceiver unit and a processing unit. The transceiver unit may be an input/output circuit or a communication interface. The processing unit is a processor, a microprocessor, or an integrated circuit integrated on the chip.

An implementation of this application further provides a computer-readable storage medium. The computer-readable storage medium stores a computer program. When the computer program is executed by a computer, the computer is enabled to implement the method on a terminal device side or the method on a network device side in the foregoing method implementations.

An implementation of this application further provides a computer program product including instructions. When the instructions are executed by a computer, the computer is enabled to implement the method on a terminal device side or the method on a network device side in the foregoing method implementations.

An implementation of this application further provides a communication system. The communication system includes the terminal device and the network device described in any one of the foregoing implementations.

For explanations and beneficial effects of related content of any of the communication apparatuses provided above, refer to the corresponding method implementation provided above, and details are not described herein again.

In the implementations of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (which is also referred to as a main memory). The operating system may be any one or more of computer operating systems, for example, a Linux operating system, a Unix operating system, an Android operating system, an iOS operating system, or a Windows operating system, that implement service processing by using a process (process). The application layer includes applications such as a browser, an address book, word processing software, and instant communication software. In addition, a specific structure of an execution body of the method provided in the implementations of this application is not specifically limited in the implementations of this application, provided that a program that records code of the method provided in the implementations of this application can be run to perform communication according to the method provided in the implementations of this application. For example, the method provided in the implementations of this application may be performed by the terminal device or the network device, or a function module that can invoke and execute the program in the terminal device or the network device.

In addition, each aspect or feature of this application may be implemented as a method, an apparatus or a product that uses standard programming and/or engineering technologies. The term "product" used in this application covers a computer program that can be accessed from any computer-readable component, carrier or medium. For example, the computer-readable medium may include but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a wireless channel, and various other media that can store, include, and/or carry instructions and/or data.

A person of ordinary skill in the art may be aware that units and algorithm steps in the examples described with reference to the implementations disclosed in this specification may be implemented by electronic hardware or a combination of computer software and electronic hardware. Whether the functions are performed by the hardware or the software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, refer to a corresponding process in the foregoing method implementations. Details are not described herein again.

In the several implementations provided in this application, it should be understood that the disclosed system, apparatus, and method may be implemented in other manners. For example, the described apparatus implementation is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions in the implementations.

In addition, function units in the implementations of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the implementations of this application. The foregoing storage medium includes various media that can store program code, such as a USB flash drive, a removable hard disk, a read-only memory (Read-Only Memory, ROM), a random access memory (Random Access Memory, RAM), a magnetic disk, and an optical disc.

The scope of protection shall be defined by the appended claims.

## Claims

1. A communication method applied to a terminal device, the method comprising:
receiving (S410) data in an active time of a current discontinuous reception, DRX, cycle; and
when a DRX inactivity timer of the current DRX cycle expires, determining (S420) a type of a next DRX cycle depending on whether at least some data received in the active time is associated with a DRX short cycle, wherein
if the at least some data is not associated with a DRX short cycle, the next DRX cycle is a DRX long cycle, or the type of the next DRX cycle is the same as that of a DRX cycle previous to the current DRX cycle;
wherein if at least one piece of data in the at least some data is associated with a DRX short cycle, the next DRX cycle is a DRX short cycle;
wherein the method is **characterised in that** it further comprises: selecting data received in the following time period:
a time period between a moment at which the PDCCH for initial data transmission is successfully demodulated for the last time in the active time and the moment at which the DRX inactivity timer expires, wherein the PDCCH for initial data transmission is not a first PDCCH for initial data transmission that is successfully demodulated in the active time;
and
using the selected data as the at least some data for determining the type of the next DRX cycle.

2. The method according to claim 1, wherein the method further comprises:
receiving configuration information of at least one data bearing medium from a network device, wherein the configuration information is used to indicate that the at least one data bearing medium is associated with a DRX short cycle or a DRX long cycle; and
the at least some data comprises data carried on the at least one data bearing medium.

3. The method according to claim 2, wherein when the configuration information comprises first identification information, it indicates the at least one data bearing medium is associated with a DRX short cycle; or when the configuration information comprises second identification information, it indicates the at least one data bearing medium is associated with a DRX long cycle.

4. The method according to claim 2, wherein when the configuration information comprises third identification information, it indicates the at least one data bearing medium is associated with a DRX short cycle; and when the configuration information does not comprise the third identification information, it indicates the at least one data bearing medium is associated with a DRX long cycle; or
when the configuration information comprises fourth identification information, it indicates the at least one data bearing medium is associated with a DRX long cycle; and when the configuration information does not comprise the fourth identification information, it indicates the at least one data bearing medium is associated with a DRX short cycle.

5. The method according to any one of claims 2 to 4, wherein the at least one data bearing medium is any one of the following:
a logical channel, LCH, a logical channel group, LCG, a combination of the LCH and the LCG, a data radio bearer, DRB, a quality of service, QoS, flow, and a protocol data unit, PDU, session.

6. A communication apparatus, configured to implement the method according to any one of claims 1 to 5.

## Patentansprüche

1. Kommunikationsverfahren, das auf eine Endgerätevorrichtung angewendet wird, wobei das Verfahren Folgendes umfasst:
Empfangen (S410) von Daten in einer aktiven Zeit eines aktuellen Zyklus mit diskontinuierlichem Empfang, DRX-Zyklus; und
wenn ein DRX-Inaktivitätstimer des aktuellen DRX-Zyklus abläuft, Bestimmen (S420) eines Typs eines nächsten DRX-Zyklus in Abhängigkeit davon, ob zumindest einige in der aktiven Zeit empfangene Daten einem DRX-Kurzzyklus zugeordnet sind, wobei
falls die zumindest einigen Daten keinem DRX-Kurzzyklus zugeordnet sind, der nächste DRX-Zyklus ein DRX-Langzyklus ist oder der Typ des nächsten DRX-Zyklus derselbe ist wie der eines dem aktuellen DRX-Zyklus vorhergehenden DRX-Zyklus;
wobei, falls mindestens ein Datenelement in den zumindest einigen Daten einem DRX-Kurzzyklus zugeordnet ist, der nächste DRX-Zyklus ein DRX-Kurzzyklus ist;
wobei das Verfahren **dadurch gekennzeichnet ist, dass** es ferner Folgendes umfasst: Auswählen von Daten, die in folgendem Zeitraum empfangen werden:
einem Zeitraum zwischen einem Zeitpunkt, zu dem der PDCCH für die anfängliche Datenübertragung in der aktiven Zeit zum letzten Mal erfolgreich demoduliert wird, und dem Zeitpunkt, zu dem der DRX-Inaktivitätstimer abläuft, wobei der PDCCH für die anfängliche Datenübertragung nicht ein erster PDCCH für die anfängliche Datenübertragung ist, der in der aktiven Zeit erfolgreich demoduliert wird;
und
Verwenden der ausgewählten Daten als die zumindest einigen Daten zum Bestimmen des Typs des nächsten DRX-Zyklus.

2. Verfahren nach Anspruch 1, wobei das Verfahren ferner Folgendes umfasst:
Empfangen von Konfigurationsinformationen für mindestens ein datentragendes Medium von einer Netzwerkvorrichtung, wobei die Konfigurationsinformationen angeben, dass das mindestens eine datentragende Medium einem DRX-Kurzzyklus oder einem DRX-Langzyklus zugeordnet ist; und
die zumindest einigen Daten Daten umfassen, die über das mindestens eine datentragende Medium übertragen werden.

3. Verfahren nach Anspruch 2, wobei die Konfigurationsinformationen, wenn sie erste Identifikationsinformationen umfassen, angeben, dass das mindestens eine datentragende Medium einem DRX-Kurzzyklus zugeordnet ist; oder die Konfigurationsinformationen, wenn sie zweite Identifikationsinformationen umfassen, angeben, dass das mindestens eine datentragende Medium einem DRX-Langzyklus zugeordnet ist.

4. Verfahren nach Anspruch 2, wobei die Konfigurationsinformationen, wenn sie dritte Identifikationsinformationen umfassen, angeben, dass das mindestens eine datentragende Medium einem DRX-Kurzzyklus zugeordnet ist; und die Konfigurationsinformationen, wenn sie die dritten Identifikationsinformationen nicht umfassen, angeben, dass das mindestens eine datentragende Medium einem DRX-Langzyklus zugeordnet ist; oder
die Konfigurationsinformationen, wenn sie vierte Identifikationsinformationen umfassen, angeben, dass das mindestens eine datentragende Medium einem DRX-Langzyklus zugeordnet ist; und die Konfigurationsinformationen, wenn sie die vierten Identifikationsinformationen nicht umfassen, angeben, dass das mindestens eine datentragende Medium einem DRX-Kurzzyklus zugeordnet ist.

5. Verfahren nach einem der Ansprüche 2 bis 4, wobei das mindestens eine datentragende Medium eines der Folgenden ist:
ein logischer Kanal, LCH, eine logische Kanalgruppe, LCG, eine Kombination aus dem LCH und der LCG, ein Datenfunkträger, DRB, ein Dienstgütefluss, QoS-Fluss, und eine Protokolldateneinheitssitzung, PDU-Sitzung.

6. Kommunikationsvorrichtung, die zur Implementierung des Verfahrens nach einem der Ansprüche 1 bis 5 konfiguriert ist.

## Revendications

1. Procédé de communication appliqué à un dispositif terminal, le procédé comprenant :
la réception (S410) de données pendant une période active d'un cycle de réception discontinue courant, DRX ; et
lorsqu'un temporisateur d'inactivité DRX du cycle DRX courant expire, la détermination (S420) d'un type d'un cycle DRX suivant en fonction du fait qu'au moins certaines données reçues pendant la période active sont associées à un cycle court de DRX, dans lequel
si les au moins certaines données ne sont pas associées à un cycle court de DRX, le cycle DRX suivant est un cycle long de DRX, ou le type du cycle DRX suivant est le même que celui d'un cycle DRX précédent le cycle DRX courant ;
dans lequel si au moins un élément de donnée parmi les au moins certaines données est associé à un cycle court de DRX, le cycle DRX suivant est un cycle court de DRX ;
dans lequel le procédé est **caractérisé en ce qu'**il comprend en outre : la sélection de données reçues au cours de l'intervalle de temps suivant :
un intervalle de temps entre un moment où le PDCCH pour la transmission initiale de données est démodulé avec succès pour la dernière fois pendant la période active et le moment où le temporisateur d'inactivité DRX expire, le PDCCH pour la transmission initiale de données n'étant pas un premier PDCCH pour la transmission initiale de données qui est démodulé avec succès pendant la période active ;
et
l'utilisation des données sélectionnées comme les au moins certaines données pour déterminer le type du cycle DRX suivant.

2. Procédé selon la revendication 1, dans lequel le procédé comprend en outre :
la réception d'informations de configuration d'au moins un support de données depuis un dispositif de réseau, les informations de configuration étant utilisées pour indiquer que le ou les supports de données sont associés à un cycle court de DRX ou à un cycle long de DRX ; et
les au moins certaines données comprennent des données transportées sur le ou les supports de données.

3. Procédé selon la revendication 2, dans lequel lorsque les informations de configuration comprennent une première information d'identification, elles indiquent que le ou les supports de données sont associés à un cycle court de DRX ; ou lorsque les informations de configuration comprennent une deuxième information d'identification, elles indiquent que le ou les supports de données sont associés à un cycle long de DRX.

4. Procédé selon la revendication 2, dans lequel, lorsque les informations de configuration comprennent une troisième information d'identification, elles indiquent que le ou les supports de données sont associés à un cycle court de DRX ; et lorsque les informations de configuration ne comprennent pas la troisième information d'identification, elles indiquent que le ou les supports de données sont associés à un cycle long de DRX ; ou
lorsque les informations de configuration comprennent une quatrième information d'identification, elles indiquent que le ou les supports de données sont associés à un cycle long de DRX ; et lorsque les informations de configuration ne comprennent pas la quatrième information d'identification, elles indiquent que le ou les supports de données sont associés à un cycle court de DRX.

5. Procédé selon l'une quelconque des revendications 2 à 4, dans lequel le ou les supports de données sont l'un quelconque des éléments suivants :
un canal logique, LCH, un groupe de canaux logiques, LCG, une combinaison du LCH et du LCG, un support radio de données, DRB, un flux de qualité de service, QoS, et une session d'unité de données de protocole, PDU.

6. Appareil de communication, configuré pour mettre en œuvre le procédé selon l'une quelconque des revendications 1 à 5.
